# EUROPEAN PATENT APPLICATION

(11) **EP 4 800 547 A1**
(43) Date of publication of application: **02.09.2026**
(21) Application number: 25222838.2
(22) Date of filing: 12.12.2025
(51) Int. Cl.: G06F 9/30

(54) **EFFICIENT TAG CHECKING FOR DYNAMICALLY REPEATING MEMORY ACCESSES**

(30) Priority: 27.02.2025 US 202563764359 P; 28.06.2025 US 202519253812
(71) Applicant: Intel Corporation, Santa Clara, CA 95054 (US)
(72) Inventor: Nuzman, Joseph, 34381 Haifa (IL); Brandt, Jason W., Austin TX, 78746 (US); Cihula, Joseph, Hillsboro OR, 97124 (US); Durham, David M., Beaverton OR, 97007 (US); Neiger, Gilbert, Portland OR, 97212 (US); Brunner, Richard A., Olympia WA, 98516 (US); LeMay, Michael, Hillsboro OR, 97123 (US)
(74) Representative: Samson & Partner Patentanwälte mbB

(57) **Abstract**

Techniques for tag checking for dynamically repeating memory accesses are described. In an embodiment, an apparatus includes instruction decoder circuitry to decode a single instruction, the single instruction having a format including an opcode field, the single instruction having a first opcode value in the opcode field; and execution circuitry coupled to the instruction decoder circuitry, the execution circuitry to perform operations in response to decoding of the single instruction, the operations including performing repeating memory tag checking operations in connection with repeating memory access operations.

## Description

### BACKGROUND

Computers and other information processing systems may store confidential, private, and secret information in their memories. Software may have vulnerabilities that may be exploitable to steal such information. Data corruption is also a risk. Hardware may also have vulnerabilities that may be exploited and/or adversaries may physically modify a system to steal information. Therefore, memory safety and security are important concerns in computer system architecture and design.

A processor in an information processing system may execute software programs based on a limited set of instructions available to be executed by the processor, defined by the instruction set architecture (ISA) of the processor. An instruction within an ISA may be referred to as a macro-instruction, in contrast with a micro-instruction, micro-operation (uop), etc. that results from the processor's decoding of a macro-instruction.

### BRIEF DESCRIPTION OF DRAWINGS

Various examples in accordance with the present disclosure will be described with reference to the drawings, in which:
FIG. 1 illustrates an example of a processor for efficient tag checking for dynamically repeating memory accesses according to embodiments.
FIG. 2A illustrates a block diagram according to embodiments, including an enhanced compiler to instrument source code with instructions to check memory accesses.
FIG. 2B illustrates an example of a pointer format according to embodiments.
FIG. 2C illustrates an example of looking up a tag in a tag table according to embodiments.
FIG. 2D illustrates an example tag table layout for an example based on 4KB linear data pages according to embodiments.
Figure 2E shows examples of pseudocode for memory tag checking operations.
FIG. 3A illustrates an example of a method for checking tags on repeated memory access operations according to embodiments.
Figures 3B to 3K show examples of code and/or pseudo-code for checking tags on repeated memory access operations according to embodiments.
FIG. 4 illustrates an example computing system according to an embodiment.
FIG. 5 illustrates a block diagram of an example processor and/or System on a Chip (SoC) that may have one or more cores and an integrated memory controller according to an embodiment.
FIG. 6A is a block diagram illustrating both an example in-order pipeline and an example register renaming, out-of-order issue/execution pipeline according to an embodiment.
FIG. 6B is a block diagram illustrating both an example in-order architecture core and an example register renaming, out-of-order issue/execution architecture core to be included in a processor according to an embodiment.
FIG. 7 illustrates examples of execution unit(s) circuitry according to an embodiment.
FIG. 8 illustrates the use of a software instruction converter to convert binary instructions in a source instruction set architecture to binary instructions in a target instruction set architecture according to an embodiment.

### DETAILED DESCRIPTION

The present disclosure relates to methods, apparatus, systems, and non-transitory computer-readable storage media for tag checking for dynamically repeating memory accesses. In an embodiment, an apparatus includes instruction decoder circuitry to decode a single instruction, the single instruction having a format including an opcode field, the single instruction having a first opcode value in the opcode field; and execution circuitry coupled to the instruction decoder circuitry, the execution circuitry to perform operations in response to decoding of the single instruction, the operations including performing repeating memory tag checking operations in connection with repeating memory access operations.

As mentioned in the background section, memory safety and security are important concerns in computer system architecture and design. Some approaches to providing memory safety (e.g., ARM Memory Tagging Extension (MTE)), any of which may be referred to as memory tagging, memory tag checking, tag checking, etc., involve associating (e.g., to indicate ownership) a first tag (or other metadata) with a memory location (e.g., by storing the first tag in the memory location alongside data, by storing the first tag in a table or other data structure indexed by an address of the memory location); comparing, to the first tag, a second tag (or other metadata) in an address pointer to the memory location in connection with an attempted access to the memory location; and allowing access to the memory location only if the second tag matches the first tag.

Existing approaches may impose excessive memory and/or performance overheads, for example, by requiring reserving physical memory in advance and/or not allowing opting in to checks on specific accesses. Therefore, the use of embodiments may be desirable because it may provide an opt-in, pay-as-you-go model of memory tag checking more flexible and/or efficient than existing approaches. In embodiments, instrumentation may be embedded within a binary program using a combination of instructions, prefixes, and/or prefix bits to selectively control tag checking. This opt-in model allows optimizing compilers and memory-safe language compilers to elide unneeded and undesired checks (e.g., accesses statically known to point to untagged regions (stack variables and global variables, accesses statically proved safe by the compiler, redundant checks, etc.). Optimizing compilers may also coalesce checking for multiple memory accesses into a smaller number of tag check instruction(s). Other benefits may include allowing the use of a streamlined instruction set to reduce implementation complexity and avoiding specialized additions outside the core, which avoids wasted silicon area for non-tagged usages.

Embodiments may include a memory tag checking mechanism or architecture that may be referred to as ChkTag (pronounced 'Check Tag'), or simply as 'a feature' or 'the feature' for convenience, but the use of the term ChkTag in this description is for example only and does not limit embodiments to mechanisms, architectures, etc. referred to as ChkTag. Embodiments, including ChkTag, may provide a mechanism to detect memory safety programming errors, such as buffer overflows and use-after-free, utilizing instructions, prefixes, and/or prefix bits inserted by compilers preceding memory accesses (e.g., potentially unsafe memory accesses).

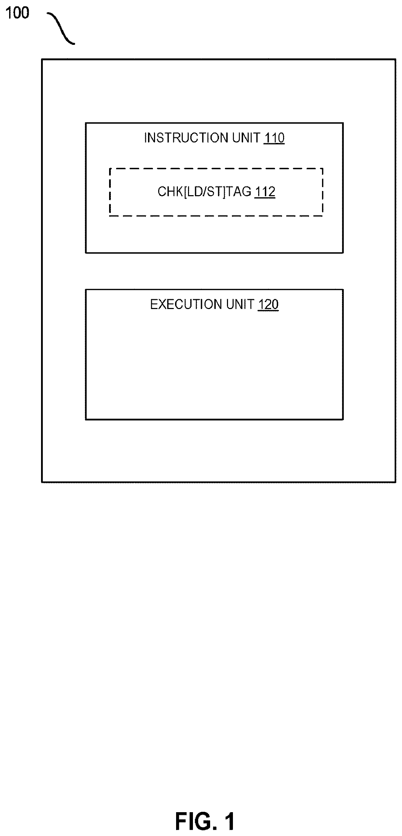

Figure 1 illustrates a simplified view of a processor 100 for tagging repeating memory accesses according to embodiments. Processor 100 may represent a hardware processor, processor core, execution core, core, etc., any of which may be referred to as a processor, core, etc., and/or all or part of a hardware component including one or more processors, cores, etc. integrated on a single substrate or packaged within a single package, each of which may include multiple execution threads and/or multiple execution cores, in any combination. Each processor represented as or in processor 100 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 100 may be architected and designed to operate according to any ISA, with or without being controlled by microcode. For convenience and/or examples, some features (e.g., instructions, registers, ISA extensions, etc.) may be referred to by a name associated with a specific processor architecture (e.g., x86, Intel^{®} 64, IA32, linear address masking (LAM)), but embodiments are not limited to those features, names, architectures, etc.

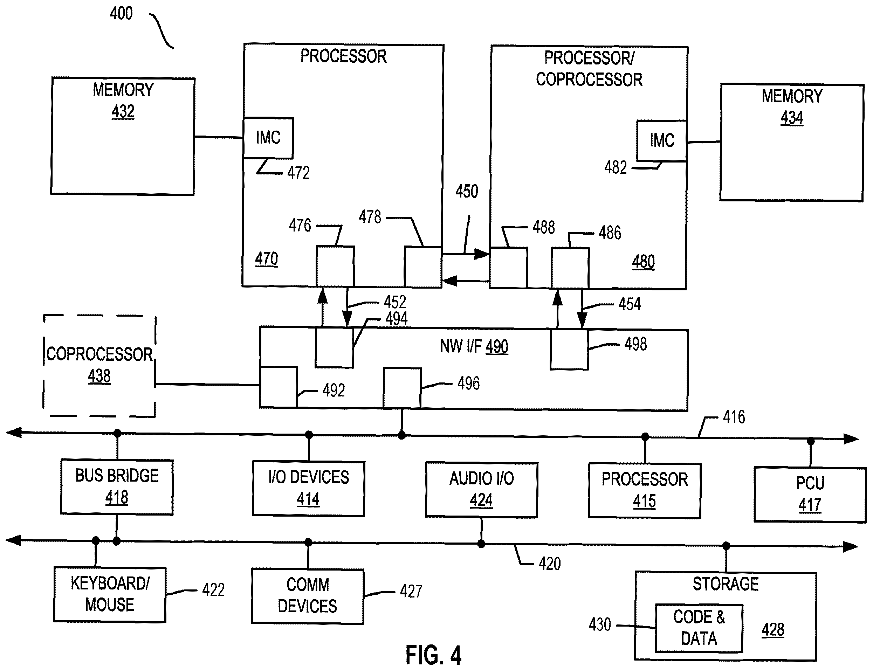

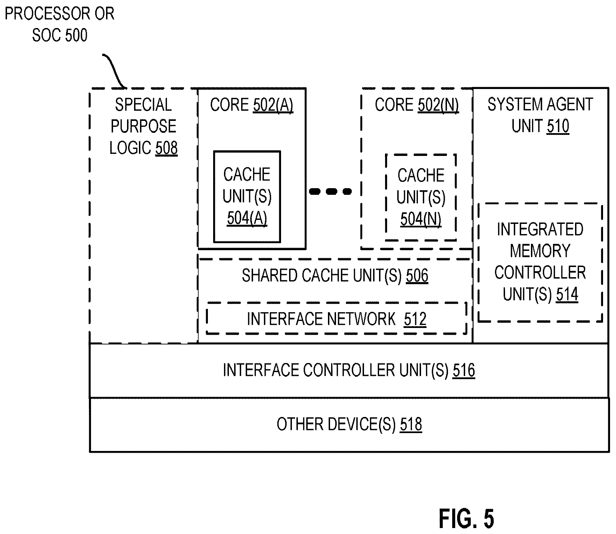

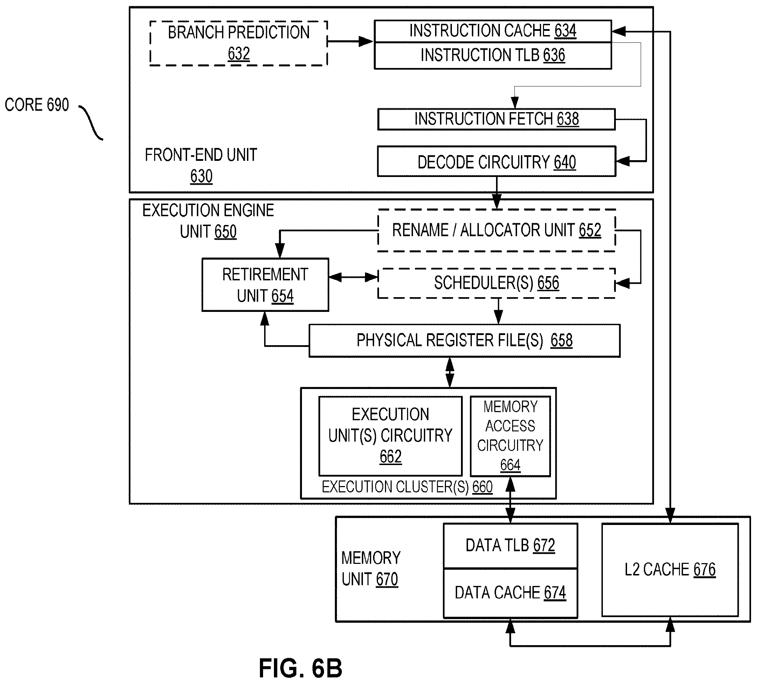

Processor 100 may be implemented in logic gates and/or any other type of circuitry, all, or parts of which may be included in a discrete component and/or integrated into the circuitry of a processing device or any other apparatus in a computer or other information processing system. For example, processor 100 in Figure 1 may correspond to and/or be implemented/included in any of processors 470, 480, or 415 in Figure 4, processor 500 or one of cores 502A to 502N in Figure 5, and/or core 690 in Figure 6B, each as described below.

As shown, processor 100 includes instruction unit 110 and execution unit 120. Processor 100 may include any number of each of these elements (e.g., multiple execution units) and/or any other elements not shown in Figure 1.

Instruction unit 110 may correspond to and/or be implemented/included in front-end unit 630 in Figure 6B, as described below, and/or may include any combination of circuitry, logic gates, programmable logic array(s), look-up table(s), structures, hardware, etc., such as an instruction decoder (e.g., decode circuitry 640 in Figure 6B), to fetch, receive, decode, interpret, schedule, and/or handle instructions, such as a memory tagging instruction 112 (e.g., CHKLDTAG, CHKSTTAG, ChkTag LEA, another explicit ChkTag instruction, a ChkTag prefixed data access instruction, etc., as described below) to be executed by processor 100. In Figure 1, an instruction that may be decoded or otherwise handled by instruction unit 110 is represented as a block with a broken line border because the instruction is not itself hardware, but instruction unit 110 may include hardware or logic capable of decoding or otherwise handling the instruction.

Although some embodiments may be described using specific instructions and/or instruction formats, any instruction format may be used in embodiments; for example, an instruction may include an opcode and one or more operands, where the opcode may be decoded into one or more micro-instructions or micro-operations for execution by execution unit 120. Operands or other parameters may be associated with an instruction implicitly, directly, indirectly, or according to any other approach.

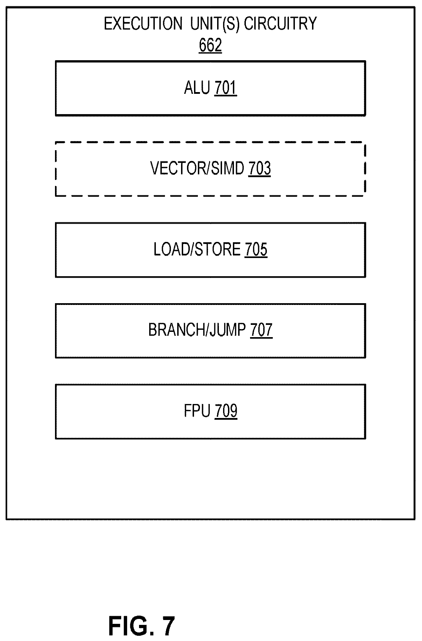

Execution unit 120 may represent an execution unit implemented in any combination of circuitry, hardware, arithmetic-logic units, load-store units, etc., coupled to instruction unit 110, to perform operations in response to decoded instructions generated by the instruction unit 110 (e.g., micro-instructions, uops, control signals, etc.), such as any combination of execution engine unit 650, execution cluster(s) 660, execution unit(s) circuitry 662, and/or memory access circuitry 664 in Figure 6B and/or Figure 7, described below.

Embodiments may include associating tags with granules of memory and checking that the corresponding tag value is present in the pointer used to access the memory. If the tag in a pointer and the tag associated with the memory location do not match, an exception is generated.

In embodiments, explicit tag checking instructions (e.g., ChkTag instructions including CHKLDTAG and CHKSTTAG) and/or ChkTag prefixed instructions may be inserted by compilers before potentially unsafe memory accesses to detect memory safety programming errors, such as buffer overflows and use-after-free. Alternatively, tags may be checked implicitly for some or all memory accesses.

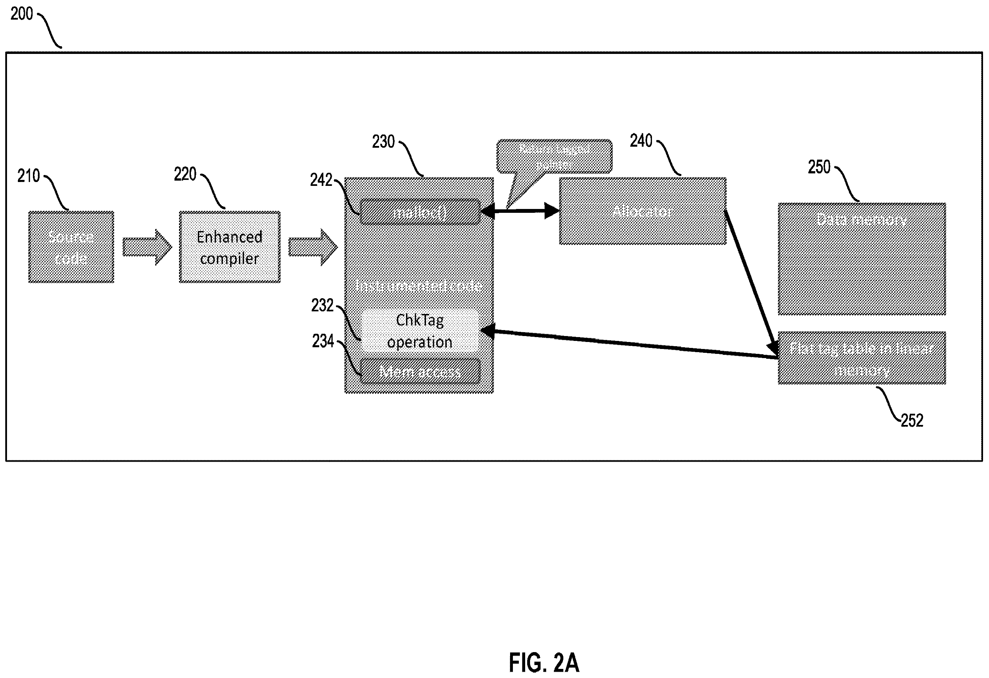

Figure 2A illustrates a block diagram 200 according to an embodiment, including an enhanced compiler 220 to instrument source code 210 with instructions to check memory accesses (e.g., explicit ChkTag instructions or instructions with ChkTag prefixes), as well as memory allocator 240 to allocate (e.g., in response to malloc instruction 242) one or more portions of a memory (e.g., data memory 250) to a program, application, or other software. A memory allocator (e.g., allocator 240) may be implemented within system software (however, embodiments are not limited to software implementations of a memory allocator). In the resulting instrumented code 230, each memory access (e.g., memory access 234) is preceded by a ChkTag operation (e.g., ChkTag operation 232, which may be performed in response to a ChkTag instruction inserted before a memory access instruction or in response to a ChkTag prefixed instruction), in which a tag in a pointer associated with the memory access operation is compared to a stored tag (e.g., in flat tag table 252 in linear memory) associated with the corresponding memory location.

In embodiments, a ChkTag instruction may specify an access range within which tags in pointers are to be compared to tags associated with the corresponding memory locations. The access range may be specified by encoding both a memory operand for the base address and a data access size into the instruction. In other embodiments, the access range may be specified by a memory operand in the ChkTag instruction (e.g., the base register specifies the first byte of the access range and the effective address specifies the last byte of the access range). Some embodiments may incorporate segmentation support for computing the access range.

The following terms may be used in descriptions of embodiments. Definitions are given as examples, without limiting embodiments to these definitions (e.g., pointers may be other sizes instead of 64 bits, LA_MSB or other bit positions may differ, etc.). Likewise, any other references, in this description or corresponding figures, to bit positions or bit lengths in values, registers, tags, etc. are given as examples and do not limit embodiments to that which is referenced.
- ChkTag prefix: A prefix or bit setting that can be applied to a subset of instruction types that access memory to indicate that a ChkTag tag check may be needed, subject to ChkTag enabling.
- Data-LA: Linear address of a memory access as used for paging. The resulting address excludes the pointer tag bits.
- LA_MSB: Index of most-significant linear address bit, from paging mode, not LAM mode: 56 for LA57, 47 for LA48.
- Pointer: 64-bit value generated by address computation, containing the tag and the address.
- Tag check: Comparison of pointer tag with corresponding tag(s) loaded from memory. Triggered by an CHKLDTAG or CHKSTTAG instruction or a ChkTag prefix, if enabled. Associated linear-address pre-processing checks, address space wrapping check, and reserved bit checks may also be performed.
- Tag-LA: Linear address used by the CPU to access an entry in the tag table during the tag check.

Examples of features that may be in included in a system architecture (e.g., ChkTag) according to embodiments:
- CHKLDTAG and CHKSTTAG instructions that accept arbitrary memory operands and specify the sizes of data accesses. Compilers and assemblers can use these to check arbitrary data accesses.
- Prefix bit or byte for certain MOV-type instructions to generate ChkTag operations with reduced code size overhead compared to CHKLDTAG and CHKSTTAG instructions.
- Separate tag table in linear memory for each half of the linear address space. Software configures tag table locations using new model-specific registers (MSRs). The size of the linear address reservation for each tag table is 1/32^{nd} the size of each half of the linear address space covered by the table. The linear address space size is determined by the paging mode. Pages in the tag table linear range can initially be uncommitted. The set of committed tag table pages can be enlarged on demand as tags are initialized for additional data pages to provide a pay-as-you-go model. An alternative is to narrow the checked ranges of the linear address space, which would result in a corresponding reduction in the tag table linear reservation. It would also be possible to define more than two checked address ranges.
- Tagging is at 16-byte granularity with a 4-bit tag size. Other granularities and tag sizes are possible.
- Tags can be read/written with all existing types of load/store instructions. This permits optimized tag table accesses. For example, allocators can limit use of locked tag update operations to just the places where they are actually necessary. Allocators can also use single instruction multiple data (SIMD) instructions for performing bulk tag updates. Large memory operations, e.g., in string and memory library routines, can perform SIMD loads and checks directly on tag memory using existing instruction types.
- Precise mismatch detection, even for stores.
- Controls in new MSRs to allow software to dynamically select checking modes (e.g., off (e.g., for minimal overhead), load and store (e.g., for maximum security coverage), and store-only (e.g., for intermediate overhead) separately for each half of the linear address space. Overheads may scale with the extent of tagging. For example, processes with a variety of configurations may exist atop a shared kernel (which may itself be tagged or untagged and instrumented or uninstrumented, with dynamically configurable modes for load and store, store-only, or disabled checks if tagged): 1) tagged process with load and store checks, 2) tagged process with store-only checks, 3) instrumented process with tagging disabled (e.g., minimal overhead, just from additional instructions treated as NOPs and ignored prefixes), and 4) uninstrumented process (zero overhead from ChkTag).
- Other types of metadata in addition to tags could potentially be encoded into pointers and/or stored in metadata tables, such as single- or double-ended bounds, version, permission bits, a compartment identifier (ID), privilege level, accessed and/or dirty bits, identifier for code authorized to access the data such as a hash value, key, KeyID, tweak value or integrity value (IV) or counter value used by the processor circuitry to encrypt/decrypt data and/or other metadata, an aggregate cryptographic message authentication code (MAC) value, Integrity-Check Value (ICV), or error-correcting code (ECC) value for the data allocation, element size, e.g., to allow generating an error if an attempt is made to access an allocation at an offset that is not an even multiple of the element size, and data object size, e.g., to permit generating an exception when accessing invalid locations outside of the data object, even if the space reserved for the allocation is larger than the size needed for the data object.

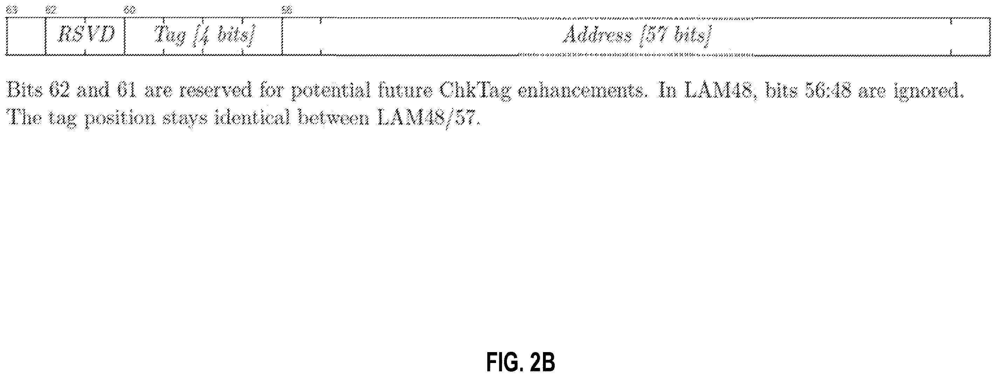

An example of a pointer format is illustrated in Figure 2B.

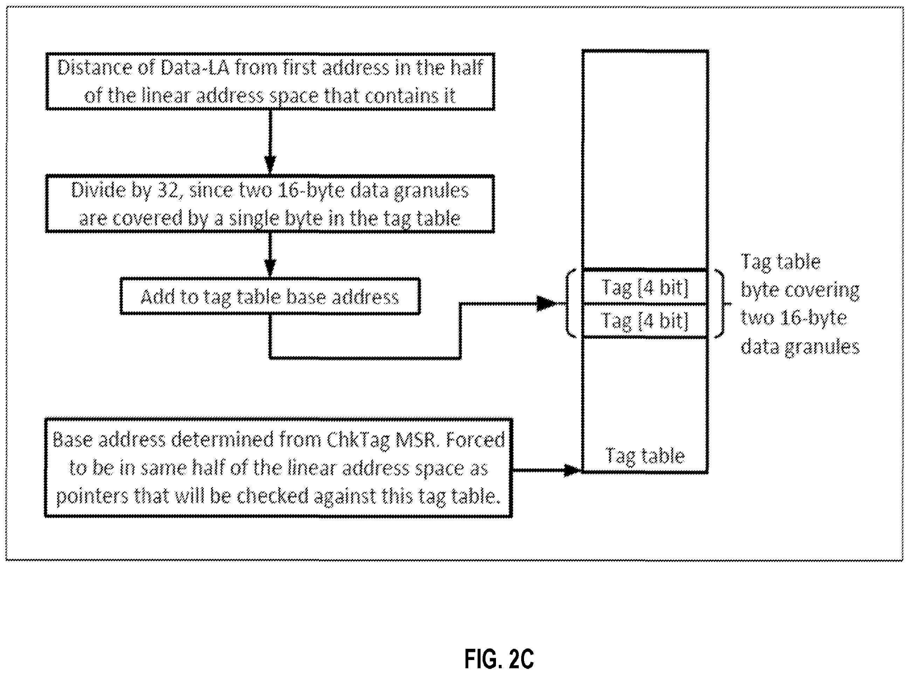

Figure 2C illustrates an example of looking up a tag in a tag table. In embodiments, each tag covers a 16-byte naturally aligned granule of memory. The tag for a given access attempt may be located by first dividing by 32 the distance of the linear address for the data from the first address in the half of the linear address space that contains it. The reason for dividing by 32 rather than the granule size of 16 bytes is that a single tag table byte contains two tags. Second, that scaled address is added to the base address for the tag table to generate the final linear address for the tag byte. Tag table base addresses may be specified as described below.

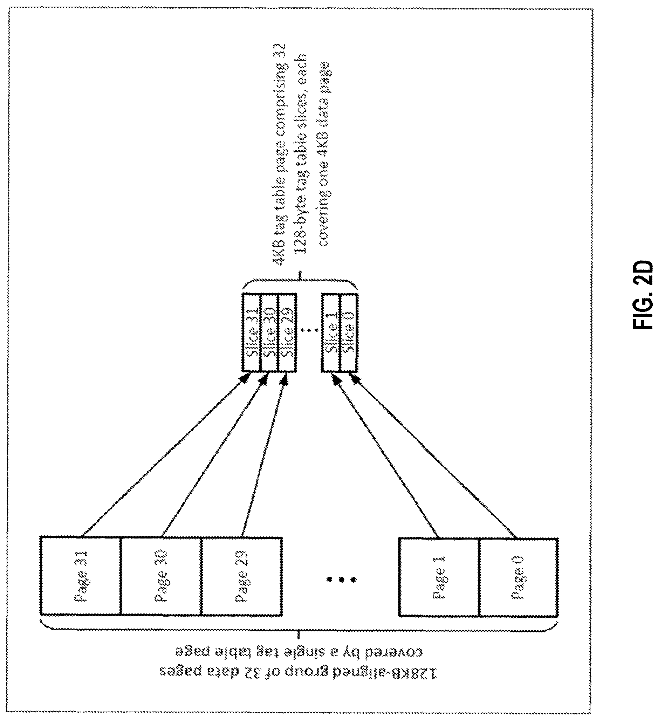

Figure 2D illustrates an example tag table layout for an example based on 4KB linear data pages (e.g., tag table coverage of data pages). To check an access, the tag for each granule to be accessed is loaded from the tag table and compared to the tag in the pointer. If any of the loaded tags does not match the tag in the pointer, an exception is generated. In embodiments, the feature (e.g., ChkTag) may introduce a new architectural exception type, (e.g., TaggingViolation, #TV), for tagging violation conditions.

Embodiments may include architectural properties to avoid leaving breadcrumbs that may permit distinguishing tag mismatches from tag matches in transient execution (e.g., cacheline state (including for page table entries (PTEs)), translation lookaside buffer (TLB) state, and load/store (LD/ST) operations (including for address/data (A/D) bit updates)).

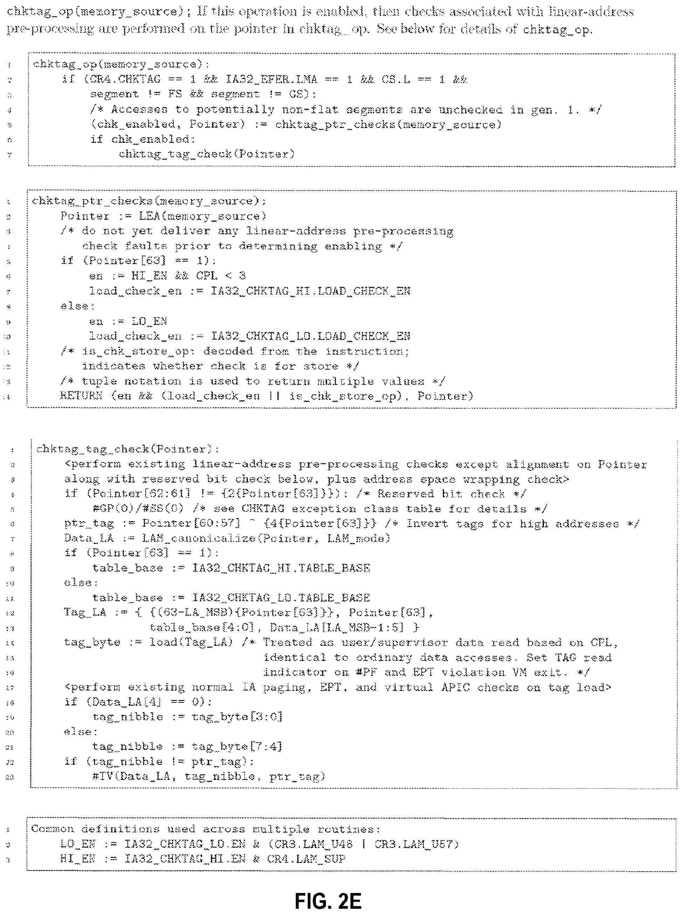

Figure 2E shows examples of pseudocode for memory tag checking operations.

Embodiments may support compact instructions (e.g., instructions in the x86 ISA) for repeating memory accesses with a dynamic counter for the number of accesses to perform. For example, the REP MOVS (move string) instruction copies data and the REP STOS (store string) instruction stores the same value repeatedly through an entire block of memory. With a tag table stored in linear memory, ordinary data loads can be used to load tag values and check them to perform checks for repeating memory accesses. However, pure software checks may have the following issues:
- May require non-allocator code to be aware of table location.
- Store checking and/or load checking might not be easily enabled/disabled with just a model-specific register (MSR) update. May require application programming interface (API) and overhead of testing/branching.
- May add some performance cost if checks can only be done up-front and not interleaved.

Therefore, embodiments may include support for efficiently checking tags on repeating memory access operations (e.g., REP string operations), to provide for enforcing memory safety (e.g., tag checking support with a high degree of software control to enable compiler optimizations that elide unneeded checks for greater efficiency and pay-as-you-go memory utilization, as described above) while preserving the usability and efficiency of repeating memory access operations. For example, embodiments may include extending REP MOVS/STOS and REPE/REPNE CMPS/SCAS instructions with prefix support, analogous to ChkTag prefix support for MOV-type instructions, to opt into tag checking, as well as, in some embodiments, standalone range-checking instructions that may be used to check other data accesses, such as scatter/gather, AMX, MASKMOV, etc.

Desirable aspects of such embodiments may include:
- Providing, compared to a pure software approach, maintaining key benefits of REP MOVSB/STOSB, simplicity, performance portability, and/or inline-ability (for decreased code size).
- Flexibility for implementations, e.g., to support either a sequential approach of checking all tags and then performing all Data-LA accesses or interleaving tag checks with Data-LA accesses.
- Efficiently checking both short string and long string operations for repeated moves (e.g., REP MOVSB) and/or repeated stores (e.g., REP STOSB).
- Support for checking other operations that access a potentially large range of memory, e.g., REPE/REPNE CMPSB, REPE/REPNE SCASB, scatter/gather, Intel^{®} Advanced Matrix Extensions (AMX), MASKMOV, coalesced checks for array accesses lifted out of a loop, etc.
- Smaller increase in code size than other tag checking approaches.
- Support for deploying a single binary, e.g., executing correctly on legacy machines or with ChkTag disabled, albeit without performing checks.

Various implementations of such embodiments are possible. For example, an approach for efficiently performing tag checks for repeating memory accesses while providing a high degree of implementation flexibility is to keep state in a register for a multiphase operation starting with tag checking and then continuing to the associated data access.

In one such embodiment, a volatile general purpose register (GPR), such as x86-64 R11, that has no other defined purpose in the application binary interface (ABI) keeps state for the multi-phased operation. Thus, its use for state-keeping is less likely to result in displacing other values from registers. However, since R11 is in the upper half of the GPR space, if it is desired to access the register (e.g., for initialization purposes) without using a REX prefix, a lower-half register, such as RDX, could be used instead. Any such register may be referred to as a phase register or as R11 (for convenience, without limiting embodiments to the use of R11 as the phase register).

In embodiments, the format of a phase register may be:

| 63:56 | 55:0 |
|---|---|
| Reserved | Count |

In embodiments using a phase register with this format, in 48-bit linear address (LA48) mode or when LAM48 is active for the half of the address space containing the base address, the nine most significant bits of Count may also be reserved. Implementations may generate a general protection fault (e.g., #GP(0), or #SS(0) for CHKTAGR operations as described later relative to RSP/RBP) at any point of the operation if any portion of the operation will lead to an address space wrap, exiting the lower address space half, overflowing the count field (e.g., if the value of RCX is too large relative to the base address), or setting a reserved bit in the Count field.

In embodiments, the phase register format may facilitate efficient initialization. For a default operation, the phase register may be zeroed out prior to beginning the operation, e.g., with XOR R11, R11 (3 instruction bytes). Alternatively, the operations that use the phase register could be extended to zero out the phase register when they are entered with the carry flag set to 1. The 1-byte CLC instruction could be used to set the carry flag.

As will be explained below, just a single byte may be added to supported REP operations to opt into tag checking, resulting in a total code size increase of four bytes for each REP operation (three bytes for initializing the phase register and one byte to opt into checking) or two bytes if the carry flag is used to control initialization, plus any additional instructions that may be needed for saving and restoring the value of R11.

In embodiments, REP MOVSB and REP STOSB operations may use ChkTag prefixes or prefix bits (e.g., REX.X and/or REX.W for a REP MOVSB or REX.X for a REP STOSB) to opt into tag checking, to include, for example, the following:
- chktag_rep_check(); Perform tag checks for the string operation. For REP MOVSB operations, source and/or destination checks can be separately selected based on REX.W and REX.X bits, respectively.
- rep_mem_op(); Perform the Data-LA accesses for the string operation.

Some combinations of prefixes may override ChkTag prefixes or prefix bits and cause one or more portions of the tag checking operation to not be enabled, e.g., if a non-flat segment is selected. Alternatively, the addition of some prefixes, such as those for selecting a non-flat segment, that would otherwise be allowed in the absence of ChkTag being enabled may instead cause an exception to be generated if used in combination with ChkTag prefixes or prefix bits when ChkTag is enabled. Certain state configurations that would otherwise be allowed in the absence of ChkTag being enabled, e.g., setting the Direction Flag (DF) to 1 to indicate the reverse direction for the operation, may instead cause an exception to be generated if used in combination with ChkTag prefixes or prefix bits when ChkTag is enabled.

The architectural definition above may involve interleaving of tag checks when both source and destination checks are needed. The definition also allows interleaving tag checks with Data-LA accesses, but it does not require such interleaving. If tag checks and Data-LA accesses are interleaved, and if the REP operation is interrupted or generates an exception, RCX, RSI, and/or RDI may be updated to reflect the progress that has been made so far and the Count field in the phase register may be zeroed.

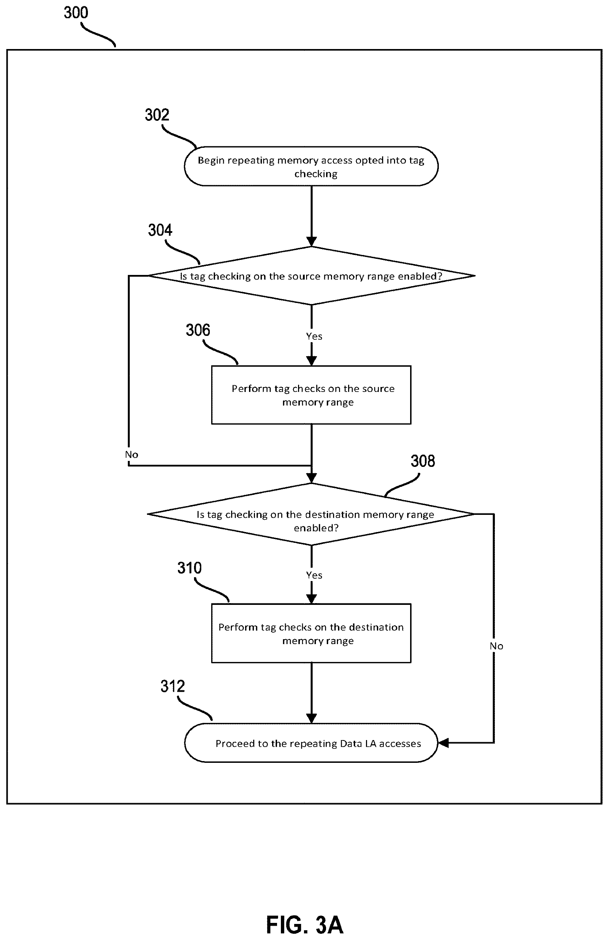

Figure 3A shows method 300, an example of the overall flow. In 302 of method 300, repeating memory access with tag checking begins.

In 304, it is determined whether tag checking on the source memory range is enabled. If so, then in 306, tag checks are performed on the source memory range and method 300 continues in 308. If not, method 300 continues in 308.

In 308, it is determined whether tag checking on the destination memory range is enabled. If so, then in 310, tag checks are performed on the source memory range and method 300 continues in 312. If not, method 300 continues in 312.

In 312, the repeating data accesses are performed.

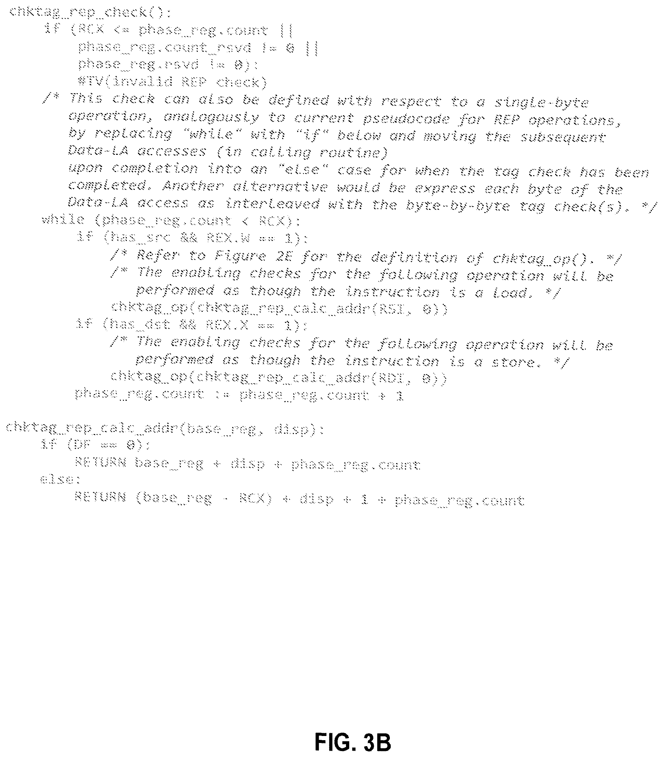

Figure 3B shows an example of pseudocode for these operations.

The pseudocode shown in Figure 3B is written in a byte-by-byte style for simplicity, but implementations may be able to combine multiple checks for efficiency.

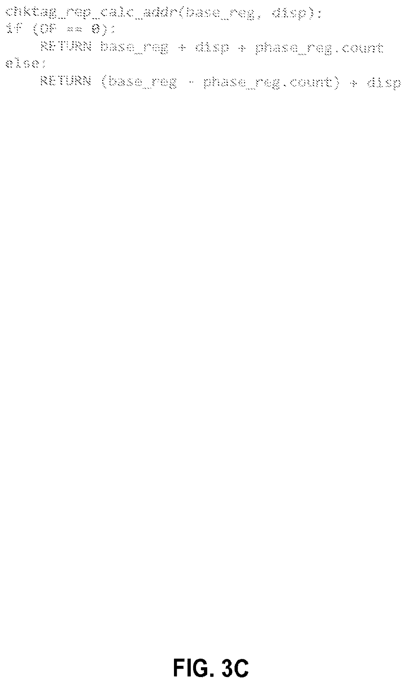

In embodiments, tag checks proceed in a forward direction regardless of the direction flag setting. However, the Data-LA accesses will still honor the direction flag setting, and the correct tag ranges will be checked even when the direction flag is set. Alternative embodiments are possible that cause the tag loads to proceed in the same direction as the data loads, or even that always perform tag loads in the reverse direction. For example, Figure 3C shows an alternative implementation of chktag_rep_calc_addr that would support matching the data access direction.

Embodiments may include standalone instructions for checking a range of addresses (e.g., for checking REPE/REPNE SCAS and REPE/REPNE CMPS instructions that lack REX.X prefixing support). These standalone instructions may also be useful for checking other large or dynamically computed memory access ranges, such as for AMX, scatter/gather ranges, and masked MOVs.

For example, these standalone instructions may be encoded without consuming any additional NOP space as follows:
- CHKLDTAGR is encoded as REX.X CHKLDTAG1
- CHKSTTAGR is encoded as REX.X CHKSTTAG1

In embodiments, setting the REX.X bit for CHKLDTAG/CHKSTTAG instructions of other sizes would cause an invalid opcode exception (#UD) to reserve the option of supporting those other sizes.

Alternative encodings are possible, such as setting the mod field to 3, which normally indicates a non-memory operand. However, being able to specify both a base register and a displacement for the starting address may be useful in some cases.

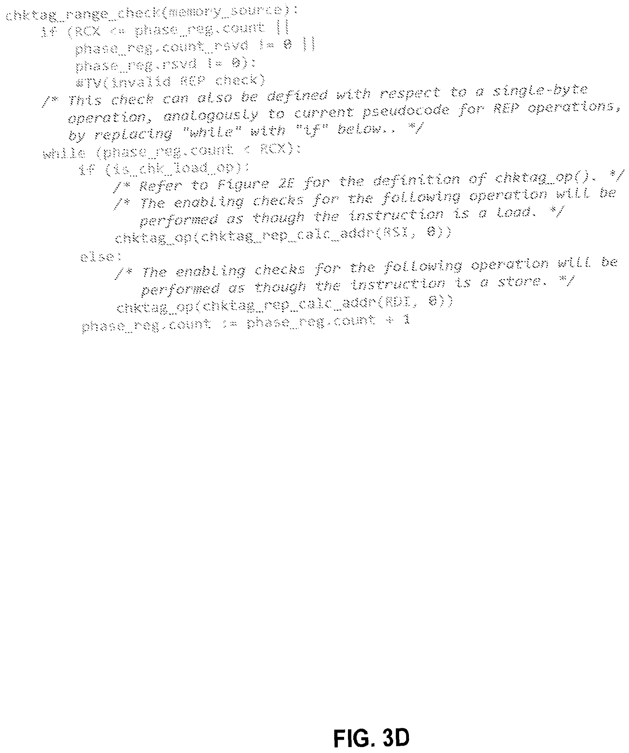

Figure 3D shows an example of pseudocode for these operations.

In embodiments, the same properties related to transient execution described above apply for tag checks on REP and range operations.

Embodiments may include the following:
- Extend checking support to other sizes of REP MOVS and REP STOS.
- Extend to additional unit sizes for the standalone range checking instructions. For example, this could be based on the sizes encoded into CHKLDTAG and CHKSTTAG instructions, such as defining a CHKLDTAGRQ instruction that checks tags for a specified number of quadword data accesses, encoding the instruction as REX.X CHKLDTAG8.
- Extend checking support to REX.X-prefixed REPE/REPNE SCAS* and REPE/REPNE CMPS* instructions. Alternatively, the CHKLDTAGR instruction can be used with those instructions. It may be desired to perform tag checks after the data loads in those instructions, since the size of the data range to be accessed may be determined dynamically. If the tag checks are performed ahead of data accesses, tags may be checked incrementally for one granule of data at a time to avoid false positives, which may be less efficient than checking more than one tag at a time. If the tag checks are performed after the data accesses, then multiple tags may be checked at a time for greater efficiency. If the data access pattern of the instruction or software routine is optimized to load multiple units of data at a time, even if some of those may end up not being used due to the terminating condition being reached ahead of using those units of data, the length of the data access range up to the terminating condition may be used to determine the range of stored tag values to check. This may also be used to optimize implicit tag checking for such data ranges. The entire data range may be accessed ahead of the tag checks, or the data range access may be divided into chunks interspersed with tag checks.
- Pre-initializing the count field in the phase register to a value other than zero, e.g., if the compiler determines statically that a portion of the access is always safe and hence does not need to be checked.

To allow for greater flexibility in dynamically controlling tag checking operations, an alternative phase register format could be used. Elements of an approach based on the phase register format as described above may be mixed with elements of the approach described for the alternative phase register format.

An alternative phase register format may be:

| 63:8 | 7:3 | 2:1 | 0 |
|---|---|---|---|
| Count | Reserved | Destination checking phase | Source checking phase |

In embodiments, two values may be supported for source checking phase:
- 0: Not done
- 1: Done / opted out / inapplicable

In embodiments, three values may be supported for destination checking phase:
- 0: Not started
- 1: Started
- 2: Done / opted out / inapplicable
- (3: Reserved)
Alternative encodings are possible for this field and others, e.g., using a set of bit flags to indicate distinct phases rather than encoding the phases in a combined numeric field.

Whether the source checking has started is implied by the Count field being non-zero.

Embodiments supporting three phases for destination checking may be desired for:
- Allowing the tag checking operations to be resumed after being suspended partway through, even if the source and destination checks are interleaved.
- Allowing the ChkTag checking mode to be changed partway through the first phase of checking. Having a "started" bit allows that condition to be detected when the checking is resumed, and the count can be reset prior to moving to the next stage of checking.

Defining a strict ordering of source checks occurring first followed by destination checks avoids the need for defining additional phase states for source checks. It is apparent that source checking has started (or completed or been opted-out) when the Count field is non-zero.

If source and destination checks are interleaved, they progress at the same rate, since only a single Count field fits in the phase register. Alternatively, an additional phase register with a second Count field could be defined to allow them to progress independently.

In LA48 mode or when LAM48 is active for the half of the address space containing the base address, the nine most significant bits of count are also reserved. Implementations may generate a general protection fault (e.g., #GP(0), or #SS(0) for CHKTAGR operations as described later relative to RSP/RBP) at any point of the operation if any portion of the operation will lead to an address space wrap, exiting the lower address space half, overflowing the Count field (e.g., if the value of RCX is too large relative to the base address), or setting a reserved bit in the Count field.

The alternative phase register format may be designed to permit efficient initialization. For a default operation, the phase register may be zeroed out prior to beginning the operation, e.g., with XOR R11, R11 (3 instruction bytes).

Placing the phase fields in the lower bit positions allows for setting and testing those bits more efficiently than if they were in higher bit positions. For example, an imm8 form of a MOV (3 instruction bytes) can be used to initialize the phase register with one of the opt-out phase settings (statically setting both would not be useful, since the relevant ChkTag prefix bits would simply be left unset if no tag checking is desired).

Just a single byte needs to be added to supported REP operations to opt into tag checking, which will result in a total code size increase of 4 bytes for each REP operation (3 bytes for initializing the phase register and 1 byte to opt into checking), plus any additional instructions that may be needed for saving and restoring the value of r11.

The phase register could be further extended with a bit to permit opting out of the data access phase of the instruction, which would allow the instruction to be used purely as a tag check operation for a different type of memory access. However, this would not be legacy compatible, as a legacy machine would ignore the data access opt-out bit, since it would have no knowledge of the new significance of that bit.

The state for the source and destination checking phases could alternatively be placed into separate registers. This would permit pre-initializing the count field to skip a portion of each of the checks independently.

The direction for either or both of the source and destination checking phases could be specified using bits in the phase register(s). This could be useful to accommodate either the beginning or the end of the source and/or destination accesses being deemed safe statically. The single count field could also be replaced with bounds to allow limiting checks to a slice in the middle of each access range.

In embodiments including an alternative phase register format, alternative REP MOVSB and REP STOSB operations may use Chk-Tag prefixes or prefix bits (e.g., REX.X and/or REX.W for a REP MOVSB or REX.X for a REP STOSB) to opt into tag checking, to include, for example, the following:
- chktag_rep_[movsb/stosb](); Perform tag checks for the string operation. For REP MOVSB operations, source and/or destination checks can be separately selected based on REX.W and REX.X bits, respectively.
- rep_mem_op(); Perform the Data-LA accesses for the string operation.

The architectural definition above does not preclude interleaving tag checks with Data-LA accesses. If accesses are interleaved, and if the REP operation is interrupted or generates an exception (i.e., is suspended), neither the source nor destination tag checking phases will be marked as complete. RCX, RSI, and/or RDI will be updated to reflect the progress that has been made so far.

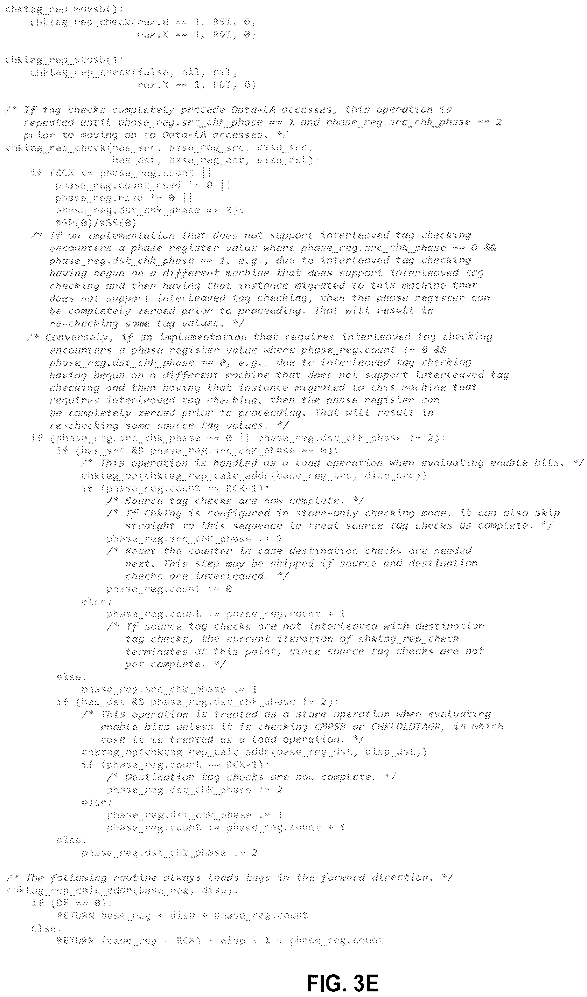

Figure 3E shows an example of pseudocode for these operations.

The pseudocode shown in Figure 3E is written in a byte-by-byte style for simplicity, but implementations may be able to combine multiple checks for efficiency.

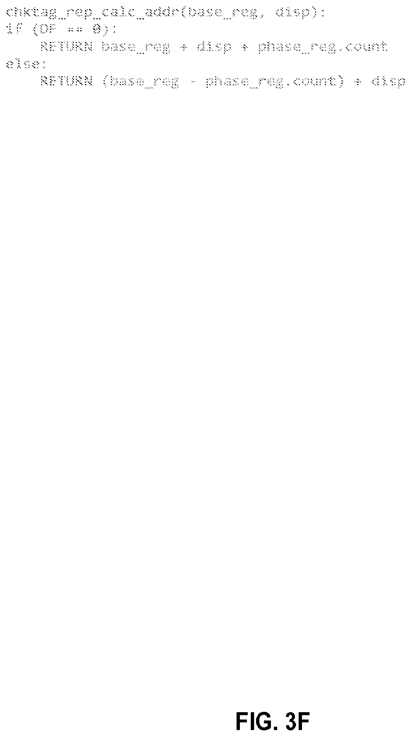

In embodiments, tag checks proceed in a forward direction regardless of the direction flag setting. However, the Data-LA accesses will still honor the direction flag setting, and the correct tag ranges will be checked even when the direction flag is set. Alternative definitions are possible that cause the tag loads to proceed in the same direction as the data loads, or even that always perform tag loads in the reverse direction. For example, Figure 3F shows an alternative implementation of chktag_rep_calc_addr that would support matching the data access direction.

Embodiments may include standalone instructions for checking a range of addresses (e.g., for checking REPE/REPNE SCAS and REPE/REPNE CMPS instructions that lack REX.X prefixing support). These standalone instructions may also be useful for checking other large or dynamically computed memory access ranges, such as for AMX, scatter/gather ranges, masked MOVs, and coalesced tag checks for array traversals lifted out of loops.

For example, these standalone instructions may be encoded without consuming any additional NOP space as follows:
- CHKLDTAGR is encoded as REX.X CHKLDTAG1
- CHKSTTAGR is encoded as REX.X CHKSTTAG1

In embodiments, setting the REX.X bit for CHKLDTAG/CHKSTTAG instructions of other sizes would cause an invalid opcode exception (#UD) to reserve the option of supporting those other sizes.

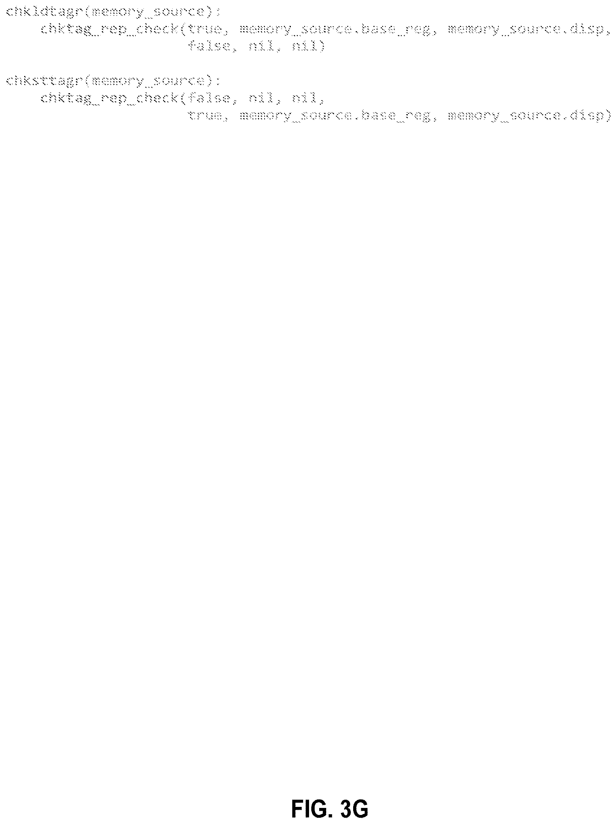

Figure 3G shows an example of pseudocode for these operations.

In embodiments, REP LODSB and REPE/REPNE SCASB instructions may be preceded by a single CHKLDTAGR instruction to check tags, and each REPE/REPNE CMPSB instruction could be preceded by two CHKLDTAGR instructions, one for each of the RSI and RDI ranges.

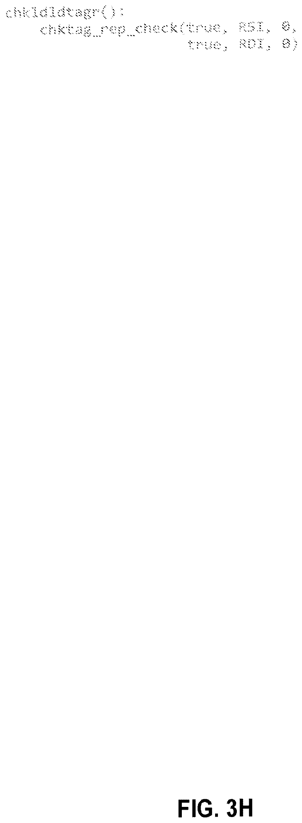

Embodiments may include a CHKLDLDTAGR instruction for checking two source ranges with the potential for interleaving dual-range tag checks, e.g., for REPE/REPNE CMPSB, as shown in Figure 3H.

In embodiments, the same properties related to transient execution described above apply for tag checks on REP and range operations.

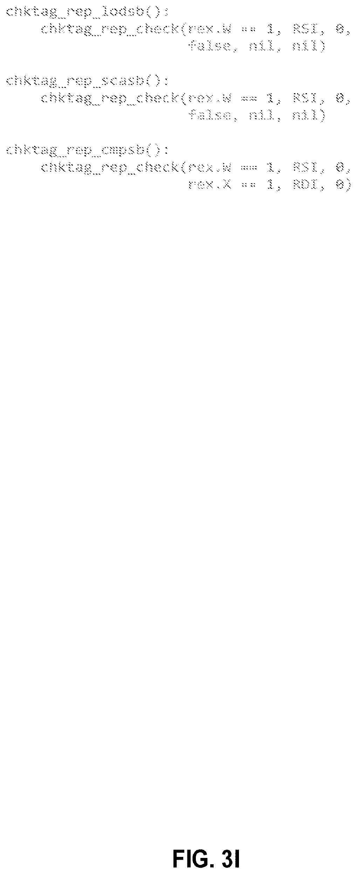

Embodiments may include support for prefixing for opting into tag checks on other types of REP string operations, e.g., REPE/REPNE CMPS, REP LODS, and REPE/REPNE SCAS. Prefix-induced tag checking could operate as shown in Figure 3I for those instructions:

Embodiments may include the following:
- The phases may be set upon entry to the instruction such that no tag checks are performed, even if ChkTag is otherwise enabled for the instruction and the REX.X/REX.W opt-in was supplied. This approach may be useful for dynamically deciding whether to opt-out.
- Alternative metadata formats (e.g., memory safety with single memory tag per allocation) could be supported to substantially reduce checking overheads for large accesses.

Embodiments may include alternatives for delivering notifications of invalid REP check operations. For example, rather than a generic #GP(0)/#SS(0) exception, invalid REP faults could be delivered as #TV faults with the #TV error code being extended to distinguish tag mismatch faults from invalid REP faults, for example:

| 31:10 | 9 | 8 | 7:4 | 3:0 |
|---|---|---|---|---|
| Reserved | Invalid REP check | Tag mismatch | Tag from table | Tag from pointer |

Other error code formats are possible, such as encoding the tag mismatch and invalid REP check error causes into a multi-value numeric field to support more efficient expansion to additional types of error causes in the future.

Embodiments may include an alternative approach for checking ranges of memory. For example, instructions may be defined as follows:
CHKLDTAGR reg
   - Possible encoding: NP WO 0F 1C 11.000.bbb
   - Checks tags for the address range from RSI+reg through RSI+RCX-1, with pointer tag from RSI+reg. DF is ignored.
   - Address calculations are 64-bit by default (RSI, RCX, reg64), optionally supporting the address size override prefix 0x67.
   - #GP if (RSI+RCX) or (RSI+RCX-1)) wraps 64-bits. No action if reg >= RCX.
   - Execution may be suspended due to exceptions or interrupts. In this case the reg argument may be updated. RSI is not updated.
   - The order of tag check loads is not defined. They may be repeated, even with non-WB memory types.
   - On successful completion, reg has value equal to RCX (or, >= RCX).
   - On tag mismatch, #TV is delivered.
      - Precise metadata provided (DLA of granule with mismatch, pointer tag, table tag)
      - reg := mismatch_DLA - RSI
CHKSTTAGR reg
   - Possible encoding: NP WO 0F 1C 11.001.bbb (alternatively, REX.W variant of CHKLDTAGR)
   - Checks tags for the address range from RDI+reg through RDI+RCX-1, with pointer tag from RDI+reg. DF is ignored.
   - Address calculations are 64-bit by default (RDI, RCX, reg64), optionally supporting the address size override prefix 0x67.
   - #GP if (RDI+RCX) (or (RDI+RCX-1)) wraps 64-bits. No action if reg >= RCX.
   - Execution may be suspended due to exceptions or interrupts. In this case the reg argument may be updated. RDI is not updated.
   - The order of tag check loads is not defined. They may be repeated, even with non-WB memory types.
   - On successful completion, reg has value equal to RCX.
   - On tag mismatch, #TV is delivered.
      - Precise metadata provided (DLA of granule with mismatch, pointer tag, table tag)
      - reg := mismatch_DLA - RDI
Usage example:
   # 10B code size overhead minimum (beyond 2B base)
   # assume DF=0
   XOR EAX, EAX
   CHKLDTAGR RAX
   XOR EAX, EAX
   CHKSTTAGR RAX
   REP MOVSB
Usage example:
   # 5B code size overhead minimum (beyond 2B base)
   # assume DF=0
   XOR EAX, EAX
   CHKSTTAGR RAX
   REP STOSB

Embodiments may include a carry flag (CF) based state initialization variation, which may provide slightly denser code by defining CF to distinguish initial execution from post-suspend execution. Then a CLC instruction can be used instead of XOR reg,reg (as described above).

For example, If CF==0, CHK*TAGR would initialize the reg argument to zero. CHK*TAGR would always set CF=1.
Usage example:
   # 8B code size overhead minimum (beyond 2B base)
   # assume DF=0
   CLC
   CHKLDTAGR RAX
   CLC
   CHKSTTAGR RAX
   REP MOVSB
Usage example:
   # 4B code size overhead minimum (beyond 2B base)
   # assume DF=0
   CLC
   CHKSTTAGR RAX
   REP STOSB

In embodiments, back-to-back CHK*TAGR without CLC between could be supported by defining CHK*TAGR to clearing CF on successful (non-suspended) completion. However, in a scenario where a first CHKLDTAGR operation is suspended and then checking for loads is disabled, when the instruction is resumed, it is now a NOP and leaves CF=1, confusing a subsequent CHKSTTAGR.

Embodiments may include a CHKLDSTTAGR instruction that that combines the functionality of LD and ST variants, which may reduce the REP MOVSB checking code size (and fixed performance overhead). Such embodiments may include an interleaved src/dst checking flow to reduce overheads.

In embodiments, code size overhead could be limited to 5B (4B for CF variant) for either REP MOVSB.

Another alternative approach closely related to some of the prior approaches could be described as follows:
- Encode a phase flags field into the top bits of RDX, i.e., RDX[63:61]. The phase values would be encoded as follows:
   - Bit 63 is set initially. The first thing the prefixed MOVSB/STOSB will do is clear this bit after initializing the counter in RDX from RCX as described below.
   - Bit 62 being set opts into source checking and indicates that source checking is not yet complete.
   - Bit 61 being set opts into dest checking and indicates that dest checking is not yet complete.
   - Encode a count into the lower 56 bits of RDX. When first entering each of phase 1 or phase 2, copy RCX[55:0] into RDX[55:0]. Decrement RDX throughout the source and dest checking phases. Any set bits in RCX above bit 55 (or 46 in four-level paging and/or LAM48 modes) are treated as reserved and lead to a new type of #TV: "string operation size overflow". Maintaining the count in RDX allows phase 1 and phase 2 to be interrupted and resumed.

The format and contents of RDX would simply be architecturally defined as reserved, with the requirement that software preserve the value of RDX throughout the entire REP MOVSB/STOSB operation. Therefore, software would leave the value untouched during the operation except for context switching purposes. Software would also preserve RCX similarly for the entire operation.

Phase 1 would be initialization: Copy from RCX into RDX counter field as described above and clear RDX[63].

Phase 2 would be source checking: Run the RDX counter down and then clear RDX[62] when complete. Also re-initialize RDX counter field from RCX if RDX[61] is set.

Phase 3 would be dest checking: Run the RDX counter down and then clear RDX[61] when complete.

Phase 4 would be the ordinary REP MOVSB/STOSB Data-LA accesses.

Since RCX would contain its original value during phase 1 and phase 2, all three phases could honor DF without requiring any additional state keeping and without needing to update RSI/RDI during phase 1 and phase 2:
- For the forward direction, the current offset could be computed by subtracting the counter in RDX from the original counter value in RCX.
- For the reverse direction, the current offset would directly be represented in the counter in RDX.

Phase 3 would honor DF and update RSI/RDI as usual.

Embodiments may include fast dispatch for REP tag checks, which may be desired because:
- Invoking library routines to perform tag checks for repeating memory operations may be inconvenient and slow, especially in binaries that also need to support legacy machines lacking ChkTag support as well as configurations where ChkTag is partially or fully disabled.
- Directly implementing support in processors for checking repeating memory operations may be complex.

For example, embodiments may include architectural support for fast dispatches to tag check routines when encountering repeating memory operations and allowing software to handle them using standalone range checking instructions or other instructions. This approach may allow seamlessly adding support in future processors for directly checking repeating memory operations without requiring any modifications to binaries.

Direct support for checking operations could be added incrementally, e.g., just supporting REP MOVSB and REP STOSB processor-implemented tag checks in some generational implementation of ChkTag while continuing to rely on software dispatch routines for other range checks, and eventually expanding processor-implemented tag checks to additional types of instructions over multiple processor generations. The level of direct processor support for tag checks may be indicated in CPUID bits so that software knows what dispatch routines are required.

A secondary benefit of a software dispatch approach is the additional flexibility that software provides, e.g.:
- Software could choose to check just the first and last addresses in the range if that is acceptable for the particular software in use, or to sample some other subset of addresses within the range, e.g., randomly or at set intervals.
- Software could implement alternative metadata formats in a separate data structure (e.g., a bounds table or a format for memory safety with single memory tag per allocation) to provide more efficient and/or deterministic checking for large accesses. A bit in the pointer could be used by the allocator to indicate when a separate data structure should be consulted during tag checks. Compatibility with other ChkTag instructions, e.g., CHKLDTAG1, and ChkTag prefixes on MOV instructions could be preserved by also populating the repeated tags in the default tag table. Those other instructions would ignore the relevant bit indicating metadata format. Alternatively, software dispatch support could be extended across all types of tag-checking instructions, not just those for REP string operations, etc. Some implementations may invoke the software dispatch routine only when the bit is set indicating the alternative metadata format and directly perform tag checks for other pointers that do not have the bit set. Even if software dispatching is used in both cases, a separate entry point or a particular flag or register setting may be used when dispatching for pointers with an alternative metadata format. If software dispatch is reserved for just pointers using an alternative metadata format, an inline instruction sequence ahead of certain tag-checked accesses may be used to detect pointers that will lead to a dispatch and handle them more efficiently inline, falling back to dispatching for compatibility with other tag-checked accesses lacking such inline code. If the dispatch operations are leading to excessive overhead, software could convert pointers to ones with the relevant pointer bit unset so that tag check operations immediately consult the default tag table rather than the alternative metadata format table. Software could set the associated repeated tag values on demand when converting a pointer in that way if those tag values have not already been set. For example, this condition could be detected by checking at least one current tag value in the relevant range.

Library routines (e.g., glibc memcpy/memset) would not be required to use the dispatch mechanism. They could directly implement checking inline with library routines. However, they may still benefit from using the dispatch mechanism, since it supports skipping checks depending on the ChkTag mode setting (e.g., store-only or temporarily off).

In embodiments, dispatch routines for checking repeating memory operations may be defined.

The x86 architecture supports a variety of repeating memory operations. Two load from memory (SCAS, CMPS), one stores to memory (STOS), and one loads and stores (MOVS). Support for checking all of these may be desired, as well as other operations that perform large or dynamically sized memory accesses such as scatter/gather, AMX, MASKMOV, etc. MOVS and STOS are especially performance-critical operations.

Therefore, in embodiments, dispatch routines for checking repeating memory operations may be defined to cover this whole variety of operations:
- Check RSI range
- Check RDI range
- Check RSI range and RDI range
- Supporting this combined routine allows for interleaving tag checks of both ranges, which also helps to reduce total initialization and loop costs.

The code address for each dispatch routine for supervisor code (CPL == 0) may be specified in an MSR. The code address for each dispatch routine for user code (CPL > 0) may be specified in an MSR. The user dispatch routine MSRs may be made user-writable, although that could increase software complexity due to libraries potentially installing separating dispatchers and needing to switch between them when calling across library boundaries. There could also be a benefit from the OS maintaining control over the dispatch routine settings and installing consistent handlers, e.g., in the Linux vDSO or Windows NTDLL. That could also eliminate context switch overheads for the user dispatch routine MSRs when switching between processes. Regardless, the handlers may be switched across VM/VMM boundaries, unless the VMM avoids using the dispatch functionality. Alternatives are possible for reducing the number of MSRs to be maintained, e.g., using a single MSR to point to a jump table with a jump for each of the dispatch routines.

Additional dispatch routines could be defined, e.g., one for each type of instruction that can generate dispatches and even for the variants of those instructions (e.g., REP MOVSB opted into both source and destination checking vs. REP MOVSB opted into just source checking, etc.). That could avoid the need for setting flags to indicate instruction identity as described below.

Different sub-entrypoints could be defined for various parameter combinations as well, e.g., a sub-entrypoint for long accesses (i.e., with RCX set to a large value) and another sub-entrypoint for shorter accesses. The sub-entrypoints can be defined for each of the overall dispatch routines as listed above or the per-instruction entrypoints as described in the previous paragraph. The size threshold for selecting sub-entrypoints could be fixed or defined in a register.

The conditions for dispatching to each of the routines from REP string instructions may be as follows:
- REP REX.WOX1 MOVSB - Check RDI range when ChkTag is enabled for the pointer in RDI.
- REP REX.W1X0 MOVSB - Check RSI range when ChkTag load checking is enabled for the pointer in RSI.
- REP REX.W1X1 MOVSB - Check RSI range when ChkTag load checking is enabled for the pointer in RSI. Check RDI range when ChkTag is enabled for the pointer in RDI.
- REPE/REPNE REX.WOX1 CMPSB - Check RDI range when ChkTag load checking is enabled for the pointer in RDI.
- REPE/REPNE REX.W1X0 CMPSB - Check RSI range when ChkTag load checking is enabled for the pointer in RSI.
- REPE/REPNE REX.W1X1 CMPSB - Check RSI range when ChkTag load checking is enabled for the pointer in RSI. Check RDI range when ChkTag load checking is enabled for the pointer in RDI.
- REP REX.X1 STOSB - Check RDI range when ChkTag is enabled for the pointer in RDI.
- REPE/REPNE REX.W1 SCASB - Check RSI range when ChkTag load checking is enabled for the pointer in RSI.

In embodiments, the processor will perform the following operations in connection with a dispatch:
• Select the appropriate dispatch routine address based on the instruction encoding and the ChkTag mode configuration:
• REP REX.WOX1 MOVSB or REP REX.X1 STOSB:
- If ChkTag is enabled for the pointer in RDI:
   - Select "check RDI range" routine address.
- Else:
   - Cancel tag checking.
• REP REX.W1X0 MOVSB or REP REX.W1X0 CMPSB or REPE/REPNE REX.W1 SCASB:
- If ChkTag load checking is enabled for the pointer in RSI:
   - Select "check RSI range" routine address.
- Else:
   - Cancel tag checking.
• REP REX.W1X1 MOVSB:
- If ChkTag load checking is enabled for the pointer in RSI:
   - If ChkTag is enabled for the pointer in RDI:
      Select "check RSI range and RDI range" routine address.
   - Else:
      Select "check RSI range" routine address.
- Else:
   - If ChkTag is enabled for the pointer in RDI:
      Select "check RDI range" routine address.
   - Else:
      Cancel tag checking.
• REP REX.WOX1 CMPSB:
- If ChkTag load checking is enabled for the pointer in RDI:
   - Select "check RDI range" routine address.
- Else:
   - Cancel tag checking.
• REPE/REPNE REX.W1X1 CMPSB:
- If ChkTag load checking is enabled for the pointer in RSI:
   - If ChkTag load checking is enabled for the pointer in RDI: Select "check RSI range and RDI range" routine address.
   - Else:
      Select "check RSI range" routine address.
- Else:
   - If ChkTag load checking is enabled for the pointer in RDI:
      Select "check RDI range" routine address.
   - Else:
      Cancel tag checking.
• If a dispatch routine address was selected (i.e., tag checking was not canceled), then:
• Encode the identity of the string instruction that generated the dispatch into a register, e.g., the flags register. The encoding is designed to minimize the number of branches needed for reaching the most common instructions, which are REP MOVSB and REP STOSB.

| Instruction | Overflow Flag (OF) (bit 11) | Sign Flag (SF) (bit 7) | Zero Flag (ZF) (bit 6) | Carry Flag (CF) (bit 0) |
|---|---|---|---|---|
| REP MOVSB | 0 | 0 | 0 | 0 |
| REP STOSB | 0 | 0 | 0 | 1 |
| REPE SCASB | 1 | 0 | 0 | 1 |
| REPNE SCASB | 1 | 0 | 1 | 1 |
| REPE CMPSB | 0 | 1 | 0 | 1 |
| REPNE CMPSB | 0 | 1 | 1 | 1 |

Detailed encoding rationale:
1. REP MOVSB has the only flag encoding with both CF==0, hence allowing quick detection of this most performance-critical instruction type.
2. REP MOVSB and REP STOSB both have flag encodings with ZF==0 and SF==OF, which satisfies the "greater" (G) condition, and no other instruction types satisfy that condition. This is useful for distinguishing instruction types (SCASB and CMPSB) that allow aborting the tag checks partway through the range depending on loads from Data-LAs.
3. The ZF setting for REPE/REPNE-encoded instructions matches the selection of E vs. NE in the instruction encoding.

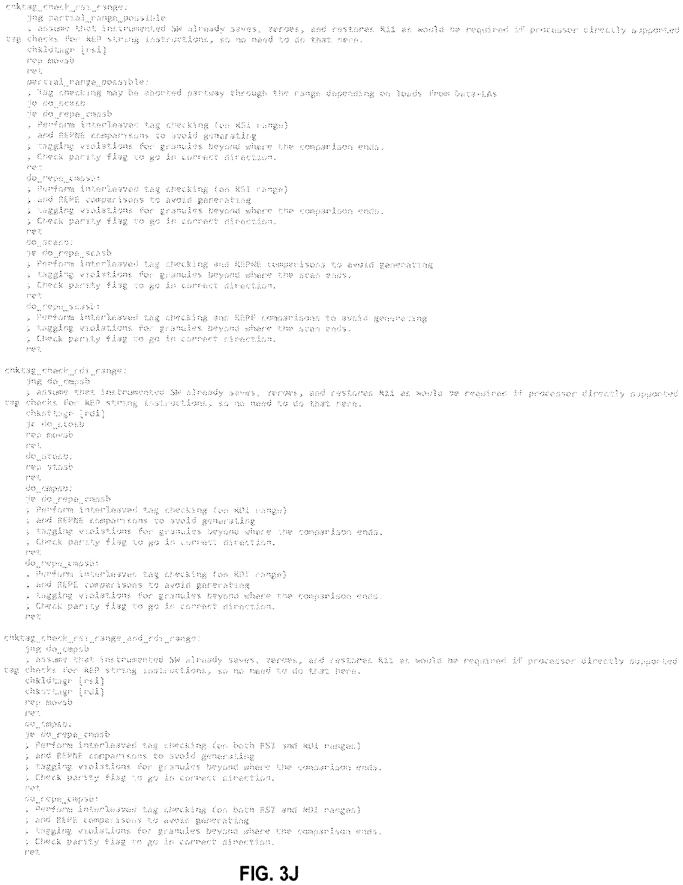

DF is copied to the Parity Flag (PF) to permit it to control a branch so that the dispatch routine can check the appropriate address range. Other flags are left unmodified. Notably, the Direction Flag (DF) value is preserved so that it will still be in effect when the Data-LA accesses are performed by REP string instructions.
- Perform a CALL to the selected address. The return address should point to the next instruction after the REP string instruction.
   - The called dispatch routine can implement the Data-LA accesses as desired. For example, it would be simple for the dispatch routine to perform tag checks first and conclude with the appropriate type of REP string instruction lacking the REX prefix in some cases. In other cases, more complex logic may be needed. Example logic is shown in the assembly code outline in Figure 3J.
- Else (i.e., tag checking was canceled), perform just the Data-LA accesses for the REP string instruction.

An alternative to a CALL-based software dispatch approach would be to route the dispatch through the exception delivery mechanism or the user-level-interrupt delivery mechanism.

Another alternative would be to provide architectural support for fast dispatches to tag check routines predicated upon ChkTag enabling for Data-LAs supplied in registers and allowing software to handle them. This approach allows avoiding extra CALL instructions on legacy machines and when checking is disabled, and it also makes it more efficient for tag checking routines to handle dynamic selection of store-only mode. This architectural enhancement could also be used within dispatch routines.

A separate dispatch routine can be defined for each type of code construct that needs to be checked. For example, a runtime library could be supplied containing dispatch routines. The architectural enhancement underlying this approach is that REP instructions modified by various prefix bits will operate in a different manner (e.g., when tag checking is enabled for supplied pointers) than the default/legacy REP behavior (e.g., when tag checking is disabled or unsupported). A purpose of the modified behavior is to allow subsequent jump instructions to be used to select different code paths depending on whether tag checks are to be used. Such embodiments may provide for subsequent instructions to perform software tag checks only when desired or needed while minimizing software overheads when the checks are undesired or unneeded.

For example, REP LODSB instructions modified by various REX prefix bits will operate in a different manner than the default/legacy REP LODSB behavior, to allow subsequent jump instructions to be used to select different code paths depending on whether tag checks are to be used for pointers in RSI and/or RDI. When CR4.CHKTAG is enabled, REP LODSB (in 64-bit mode) with the following REX prefix bit settings has modified operation as follows:
1. REP REX.WOX1B0 LODSB (e.g., to precede REP STOSB)
   a. If ChkTag is enabled for the pointer in RDI: No-op
   b. Else: Zero RCX
2. REP REX.W1X0B0 LODSB (e.g., to precede REPE/REPNE SCASB)
   a. If ChkTag load checking is enabled for the pointer in RSI: No-op
   b. Else: Zero RCX
3. REP REX.W1X1B0 LODSB (e.g., to precede REP MOVSB)
   a. If ChkTag load checking is not enabled for the pointer in RSI and ChkTag is not enabled for the pointer in RDI: Zero RCX
   b. Else:
      i. If ChkTag load checking is enabled for the pointer in RSI: Set sign flag
      ii. If ChkTag is enabled for the pointer in RDI: Set carry flag
4. REP REX.W1X0B1 LODSB (for checking operations with dual sources, e.g., REPE/REPNE CMPSB)
   a. If ChkTag load checking is not enabled for the pointer in RSI and ChkTag load checking is not enabled for the pointer in RDI: Zero RCX
   b. Else:
      i. If ChkTag load checking is enabled for the pointer in RSI: Set sign flag
      ii. If ChkTag load checking is enabled for the pointer in RDI: Set carry flag
5. Other REX bit combinations cause REP LODSB legacy behavior to be performed.

Alternative instruction and flag encodings are possible. The modified instruction used for checking ChkTag enabling state may instead be a legacy no-op that is modified to perform operations based on ChkTag enabling state that result in changes to architectural state that allow for selecting different code paths for tag checking.

In embodiments, REX-prefixed instructions (e.g., LODSB) would additionally increment RSI (or decrement RSI if the instruction is defined to check the direction flag and the flag is set), just as occurs in legacy behavior, to allow the use of consistent code after the instruction. Note that non-REX-prefixed instructions (e.g., LODSB) continue to exhibit legacy behavior regardless of the setting of CR4.CHKTAG.

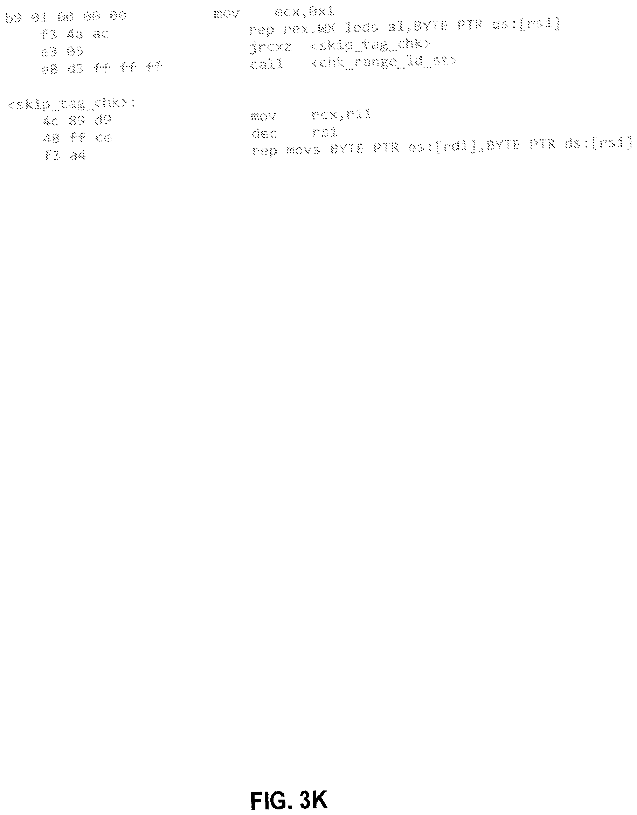

In embodiments, REP string operations and other operations requiring checks of address ranges can be preceded by SW sequences, such as the example shown in Figure 3K, to dispatch to tag check routines (assume that r11 is initialized with the size in bytes of the access at the start). Additional code may compensate for AL being clobbered. The chk_range_ld_st routine is assumed to perform the tag check, e.g., using types of instructions. That routine will select different code paths depending on the settings of the sign and carry flags. Different routines would be selected for different types of checked operations, e.g., REP STOS.

To avoid LODSB loading a byte from a zero-length buffer in the legacy/disabled configuration, it can be preceded with an additional branch to completely skip the code section for performing the repeated access and associated tag checks when a length of zero is supplied.

REX-prefixed instructions (e.g., LODSB) could optionally be extended further to supply useful information in RAX and/or RCX to the tag-checking routine in the configuration where tag-checking is enabled. For example, it could supply the computed Tag-LA addresses for the supplied addresses.

Embodiments may include locating a tag mismatch without actually generating an exception. For example, in an alternative approach, a range check instruction is defined to simply update an address pointer register, e.g., RSI or RDI, to the location where a tag mismatch occurs such that a subsequent CHKLDTAG or CHKSTTAG instruction or ChkTag-prefixed instruction can perform a tag check on the location referenced by that register and deliver a #TV tag mismatch exception if the tag mismatch is still detected at that location. This approach may be desired because it may reduce the complexity of the instruction that performs tag checks for repeating memory accesses. However, it may introduce race conditions leading to false negatives. The false negatives may occur even if a different location in the memory range still has a tag mismatch even if the first one detected is no longer present, since the tag check stops at the first detected tag mismatch, and if that mismatch goes away prior to it triggering a #TV to be delivered, any subsequent tag mismatches or new tag mismatches that arise in the previously scanned portion of the address range will not be detected.

Embodiments may include enabling additional compiler optimizations through more expressive prefix encodings.

For example, some ChkTag encodings may derive the load or store direction of the data access from the data access instruction being prefixed or by encoding one direction or the other into a specific tag checking instruction. However, additional compiler optimizations are possible by supporting more expressive encodings.

It may be useful to promote the tag checks on certain load instructions to also be performed even in store-only checking mode. An additional prefix, e.g., F3 or APX REX2.X4, may be used to indicate that this promotion should occur.

It may be useful to mark certain store-type tag checks as only being needed in store-only mode such that they will not be performed in load+store checking mode. Prefixes like those in the previous paragraph or different instruction encodings may be used to indicate this.

For combined operations with both load(s) and store(s), a variety of prefix combinations or other instruction encodings may be used to select the precise checks desired in various modes for the load and/or store access(es).

Instructions specifying multiple Data-LA access ranges may use more complex encodings to specify the full spectrum of possible check requirements. For example, a ChkTag-prefixed REP MOVS operation may check both a source range and a destination range with separate prefix encodings for opting into just load checks on the source range, just store checks on the destination range, or both, as described earlier. These settings may be modified, e.g., by using REX2.X4 to promote the load checks to also be performed even in store-only mode and REX.B/REX2.B3 to indicate that the store checks are only needed in store-only mode.

In embodiments, an address size override prefix allows altering the width of the effective address, e.g., from 64 bits to 32 bits. This may be supported in a variety of ChkTag operations to control the width of the pointer value that feeds into tag checks.

Embodiments may provide for ChkTag virtualization. For example, ChkTag may define 64-bit virtual machine control structure (VMCS) fields of a new IA32_CHKTAG_HI MSR, one in the guest-state area as shown in Table 1 and one in the host-state area as shown in Table 2.

**Table 1: Encodings for 64-bit VMCS Guest-State Fields for ChkTag (0010_10xx_xxxx_xxxAb).**

| Field Name | Index | Encoding |
|---|---|---|
| Guest IA32_CHKTAG_HI (full) | 000011001B | 00002832H |
| Guest IA32_CHKTAG_HI (high) | 00002833H | |

**Table 2: Encodings for 64-bit VMCS Host-State Fields for ChkTag (0010_11xx_xxxx_xxxAb).**

| Field Name | Index | Encoding |
|---|---|---|
| Guest IA32_CHKTAG_HI (full) | 000011001B | 00002832H |
| Guest IA32_CHKTAG_HI (high) | 00002833H | |

In addition, there may be a "load IA32_CHKTAG_HI" VM-entry control (e.g., position 26) and a "load IA32_CHKTAG_HI" VM-exit control (e.g., position 4 of the secondary VM-exit controls). The VM-entry control is enumerated in the IA32_VMX_ENTRY_CTLS MSR and the VM-exit control is enumerated in the IA32_VMX_EXIT_CTLS2 MSR.

In embodiments, VMX transitions manage the IA32_CHKTAG_HI MSR as follows:
- If the "load IA32_CHKTAG_HI" VM-entry control is 1, VM entries fail if bits reserved in the IA32_CHKTAG_HI MSR are not 0 in the "guest IA32_CHKTAG_HI" field.
- If the "load IA32_CHKTAGHI" VM-exit control is 1, VM entries fail if bits reserved in the IA32_CHKTAG_HI MSR are not 0 in the "host IA32_CHKTAG_HI" field.
- If the "load IA32_CHKTAG_HI" VM-entry control is 1, VM entries load the IA32_CHKTAG_HI MSR from the "guest IA32_CHKTAG_HI" field.
- If the processor supports the 1-setting of the "load IA32_CHKTAG_HI" VM-entry control, VM exits unconditionally save the value of the IA32_CHKTAG_HI MSR into the "guest IA32_CHKTAG_HI" field.
- If the "load IA32_CHKTAG_HI" VM-exit control is 1, VM exits load the IA32_CHKTAG_HI MSR from the "host IA32_CHKTAG_HI" field. Bits that are reserved in that MSR are maintained with their reserved values.

Embodiments may include natural support for exiting on #TV with reporting for the faulting Data-LA in the exit qualification field and TVEC in the VM-Exit interruption error code field. For example, bit 11 of VM-Exit interruption information will be set (to indicate "error code valid").

Embodiments may include a new EPT violation exit qualification bit (e.g., in position 17) for distinguishing tag loads (including page walks). The new bit would be defined only if bit 7 is set (on a linear access) but may be set even if bit 8 is clear (e.g., on a guest page walk for a linear access). The bit would be set whenever the original linear access was a tag load.

In embodiments, #VE reports the same information as the EPT violation VM exit.

In embodiments, a new APIC_ACCESS VM exit qualification "access type" may be defined for "ChkTag tag load". For example, the access type code may be 5. Otherwise, the existing access type code 0 for "linear access for a data read during instruction execution" could be reused for tag loads.

In embodiments, VMMs can reduce ChkTag instruction emulation overheads by relying on the strict ordering between tag loads, tag checks, and data loads, i.e., that tag loads and tag checks precede data loads. A VMM can know when emulating a #PF with TAGRD==0 for a ChkTag-prefixed MOV that it does not need to emulate the tag check, since the tag check is already complete.

Example apparatuses, methods, etc.

According to some examples, an apparatus (e.g., a hardware processor, processor core, execution core, etc.) includes instruction decoder and execution circuitry. The instruction decoder circuitry is to decode a single instruction, the single instruction having a format including an opcode field, the single instruction having a first opcode value in the opcode field. The execution circuitry is coupled to the instruction decoder circuitry to perform operations in response to decoding of the single instruction, the operations including performing repeating memory tag checking operations in connection with repeating memory access operations.

Any such examples may include any or any combination of the following aspects. The first opcode value is to indicate the repeating memory access operations. The format also includes a prefix field, the single instruction having a first prefix value in the prefix field, the first prefix value to indicate that the repeating memory tag checking operations are to be performed. The format also includes a prefix field, the single instruction having a first prefix value in the prefix field, the first prefix value to indicate that the repeating memory tag checking operations are to be performed on a plurality of source locations. The format also includes a prefix field, the single instruction having a first prefix value in the prefix field, the first prefix value to indicate that the repeating memory tag checking operations are to be performed on a plurality of destination locations. The first opcode value is to indicate that repeating memory tag checking operations are to be performed. The repeating memory access operations include repeating a move or store operation from a plurality of source locations to a plurality of destination locations. The apparatus also includes a phase register to keep state for a plurality of phases of the operations. The phase register has a count field to indicate a phase count for the repeating memory access operations. The phase register has a source checking phase field to indicate whether a memory tag checking operation has been completed for a source location for a phase indicated by the phase count. The phase register has a destination checking phase field to indicate whether a memory tag checking operation has been completed for a destination location for a phase indicated by the phase count. The phase register has a destination checking phase field to indicate whether a memory tag checking operation has been started for a destination location for a phase indicated by the phase count. The phase register has an opt-out field to indicate whether tag checks for the repeating memory access operations are to be skipped. The repeating memory tag checking operations are to be interleaved with the repeating memory access operations. The repeating memory tag checking operations are to proceed in a same direction as the repeating memory access operations. The repeating memory tag checking operations are to proceed in a different direction than the repeating memory access operations.

According to some examples, a method includes decoding a single instruction, the single instruction having a format including an opcode field, the single instruction having a first opcode value in the opcode field; and performing operations in response to decoding of the single instruction, the operations including performing repeating tag checking operations in connection with repeating memory access operations.

Any such examples may include any or any combination of the following aspects. The operations also include performing the repeating memory access operations in response to decoding the first opcode value. The first opcode value is to indicate the repeating memory access operations. The format also includes a prefix field, the single instruction having a first prefix value in the prefix field, the first prefix value to indicate that the repeating memory tag checking operations are to be performed. The format also includes a prefix field, the single instruction having a first prefix value in the prefix field, the first prefix value to indicate that the repeating memory tag checking operations are to be performed on a plurality of source locations. The format also includes a prefix field, the single instruction having a first prefix value in the prefix field, the first prefix value to indicate that the repeating memory tag checking operations are to be performed on a plurality of destination locations. The first opcode value is to indicate that repeating memory tag checking operations are to be performed. The repeating memory access operations include repeating a move or store operation from a plurality of source locations to a plurality of destination locations. The method also includes keeping state for a plurality of phases of the operations in a phase register. The phase register has a count field to indicate a phase count for the repeating memory access operations. The phase register has a source checking phase field to indicate whether a memory tag checking operation has been completed for a source location for a phase indicated by the phase count. The phase register has a destination checking phase field to indicate whether a memory tag checking operation has been completed for a destination location for a phase indicated by the phase count. The phase register has a destination checking phase field to indicate whether a memory tag checking operation has been started for a destination location for a phase indicated by the phase count. The phase register has an opt-out field to indicate whether tag checks for the repeating memory access operations are to be skipped. The repeating memory tag checking operations are to be interleaved with the repeating memory access operations. The repeating memory tag checking operations are to proceed in a same direction as the repeating memory access operations. The repeating memory tag checking operations are to proceed in a different direction than the repeating memory access operations.

According to some examples, a non-transitory machine-readable medium stores instructions, including a single instruction which, when decoded by a machine, causes the machine to perform a method including performing repeating tag checking operations in connection with repeating memory access operations.

Any such examples may include any or any combination of the following aspects. The method also includes performing the repeating memory access operations in response to decoding the single instruction.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when decoded and/or executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

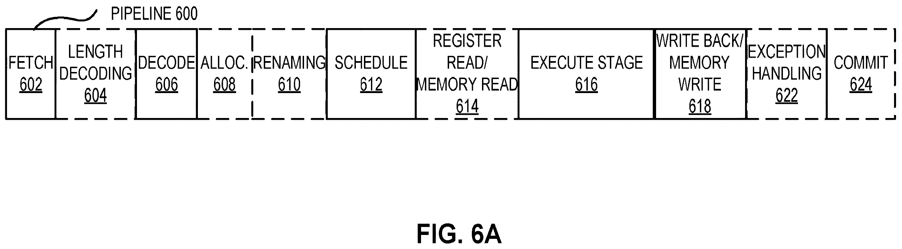

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

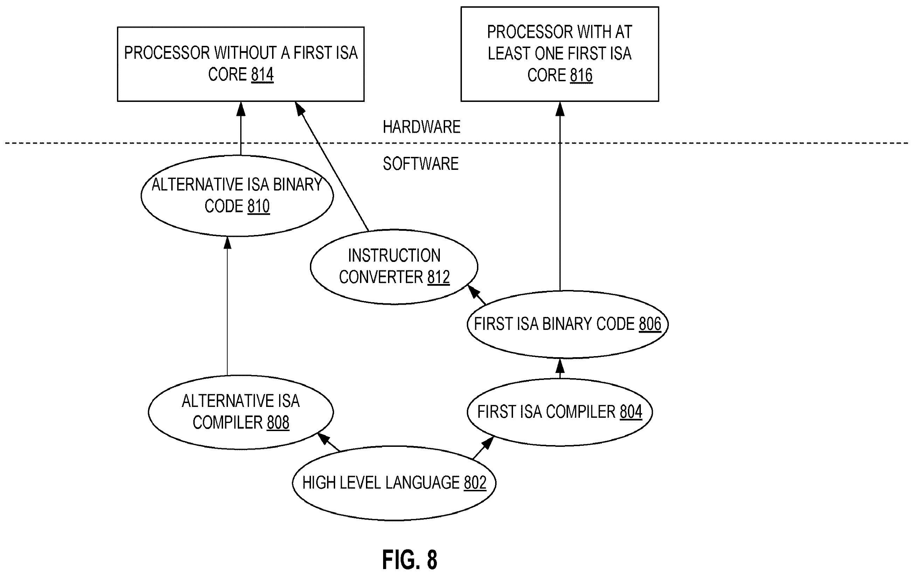

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
instruction decoder circuitry to decode a single instruction, the single instruction having a format including an opcode field, the single instruction having a first opcode value in the opcode field; and
execution circuitry coupled to the instruction decoder circuitry, the execution circuitry to perform operations in response to decoding of the single instruction, the operations including performing repeating memory tag checking operations in connection with repeating memory access operations.

2. The apparatus of claim 1, wherein the first opcode value is to indicate the repeating memory access operations.

3. The apparatus of claim 2, wherein the format also includes a prefix field, the single instruction having a first prefix value in the prefix field, the first prefix value to indicate that the repeating memory tag checking operations are to be performed on a plurality of source locations or a plurality of destination locations.

4. The apparatus of claim 1, wherein the first opcode value is to indicate that repeating memory tag checking operations are to be performed.

5. The apparatus of any of claims 1-4, wherein the repeating memory access operations include repeating a move or store operation from a plurality of source locations to a plurality of destination locations.

6. The apparatus of any of claims 1-5, further comprising a phase register to keep state for a plurality of phases of the operations.

7. The apparatus of claim 6, wherein the phase register has a count field to indicate a phase count for the repeating memory access operations.

8. The apparatus of claim 7, wherein the phase register has a source checking phase field to indicate whether a memory tag checking operation has been completed for a source location for a phase indicated by the phase count or a destination checking phase field to indicate whether a memory tag checking operation has been completed for a destination location for a phase indicated by the phase count.

9. The apparatus of claim 7, wherein the phase register has a destination checking phase field to indicate whether a memory tag checking operation has been started for a destination location for a phase indicated by the phase count.

10. The apparatus of any of claims 6-9, wherein the phase register has an opt-out field to indicate whether tag checks for the repeating memory access operations are to be skipped.

11. The apparatus of any of claims 1-10, wherein the repeating memory tag checking operations are to be interleaved with the repeating memory access operations.

12. The apparatus of any of claims 1-11, wherein the repeating memory tag checking operations are to proceed in a same direction as the repeating memory access operations.

13. A method comprising:
decoding a single instruction, the single instruction having a format including an opcode field, the single instruction having a first opcode value in the opcode field; and
performing operations in response to decoding of the single instruction, the operations including performing repeating tag checking operations in connection with repeating memory access operations.

14. The method of claim 13, wherein the operations also include performing the repeating memory access operations in response to decoding the first opcode value.

15. A non-transitory machine-readable medium storing instructions, including a single instruction which, when decoded by a machine, causes the machine to perform a method comprising performing repeating tag checking operations in connection with repeating memory access operations.
